# EUROPEAN PATENT APPLICATION

(11) **EP 4 808 210 A1**
(43) Date of publication of application: **16.09.2026**
(21) Application number: 24896342.3
(22) Date of filing: 19.11.2024
(51) Int. Cl.: H04W 36/00, H04W 36/08, H04W 56/00

(54) **CELL HANDOVER METHOD AND COMMUNICATION APPARATUS**

(30) Priority: 30.11.2023 CN 202311637519
(71) Applicant: Huawei Technologies Co., Ltd., Shenzhen, Guangdong 518129 (CN)
(72) Inventor: HUANG, Xiuxuan, Shenzhen, Guangdong 518129 (CN); LI, Xinxian, Shenzhen, Guangdong 518129 (CN); DING, Mengying, Shenzhen, Guangdong 518129 (CN); PENG, Jinlin, Shenzhen, Guangdong 518129 (CN)
(74) Representative: Gill Jennings & Every LLP
(86) International application number: PCT/CN2024/132969
(87) International publication number: WO 2025/113251

(57) **Abstract**

This application relates to the communication field, and specifically, to a method for cell handover and a communication apparatus. In carrier aggregation scenarios, a terminal may change a secondary cell used for communication. Generally, the change of the secondary cell needs to be implemented through secondary cell activation after primary cell handover. From the start of the primary cell handover to the completion of the secondary cell activation, a relatively long period of time may elapse, during which the terminal is unable to perform carrier aggregation, thereby negatively impacting user experience. In the method provided in this application, information for triggering primary cell handover may be further used to trigger secondary cell change, so that secondary cell change can be performed synchronously with primary cell handover. In comparison with the method of activating a secondary cell after primary cell handover is completed, the method provided in this application can reduce a latency of changing the secondary cell.

## Description

This application claims priority to Chinese Patent Application No. 202311637519.6, filed with the China National Intellectual Property Administration on November 30, 2023 and entitled " METHOD FOR CELL HANDOVER AND COMMUNICATION APPARATUS", which is incorporated herein by reference in its entirety.

### TECHNICAL FIELD

This application relates to the communication field, and specifically, to a method for cell handover and a communication apparatus.

### BACKGROUND

Carrier aggregation (carrier aggregation, CA) is a technology for increasing transmission bandwidth, and is capable of aggregating a plurality of frequency domain resources, to improve resource utilization. In CA, serving cells of a terminal include a primary cell (primary cell, PCell) and a secondary cell (secondary cell, SCell). A component carrier (component carrier, CC) corresponding to the primary cell is referred to as a primary component carrier (primary component carrier, PCC), and a CC corresponding to the secondary cell is referred to as a secondary component carrier (secondary component carrier, SCC). CA can aggregate one PCC and at least one SCC for use by the terminal.

CA can support aggregation of up to 16 CCs, and the terminal may use only a part of the CCs. In this case, if a traffic load of a currently used CC is high or a channel state is poor, the terminal may switch the CC in use, that is, perform cell handover. Cell handover requires operations such as time synchronization and channel measurement, and some time is consumed before the cell handover can be completed. Therefore, how to reduce a latency of cell handover is a problem to be resolved currently.

### SUMMARY

Embodiments of this application provide a method for cell handover, a communication apparatus, a computer-readable storage medium, and a computer program product, to reduce a latency of cell handover.

According to a first aspect, an embodiment of this application provides a method for cell handover. An execution body of the method may be a terminal or a chip used in a terminal. The following uses an example in which the execution body is the terminal for description. The method is applied to the terminal, and serving cells of the terminal include a first primary cell and a first secondary cell, and the method includes: receiving first information, where the first information indicates the terminal to change a primary cell from the first primary cell to a second primary cell, and the first information includes an identifier of a second secondary cell; and based on the first information, changing the primary cell from the first primary cell to the second primary cell, and changing a secondary cell from the first secondary cell to the second secondary cell.

In this method, in addition to triggering primary cell handover, the first information may be further used to trigger secondary cell change, so that secondary cell change and primary cell handover can be performed synchronously. In comparison with a method of activating a secondary cell after primary cell handover is completed, the method can reduce a latency of secondary cell change.

Optionally, before the first secondary cell is changed to the second secondary cell based on the first information, the method further includes: receiving a downlink synchronization signal of the second secondary cell; and performing cell search based on the downlink synchronization signal to obtain time-frequency synchronization with the second secondary cell.

Optionally, the performing cell search based on the downlink synchronization signal to obtain time-frequency synchronization with the second secondary cell includes: before receiving the first information, performing cell search based on the downlink synchronization signal to obtain time-frequency synchronization with the second secondary cell.

Downlink synchronization may be performed before the first information is received. For example, the terminal may receive a synchronization signal of a candidate secondary cell to complete downlink synchronization, and may no longer perform downlink synchronization after receiving the first information, thereby reducing the latency of secondary cell change.

Optionally, before the first secondary cell is changed to the second secondary cell, the method further includes: receiving a reference signal of the second secondary cell; and sending channel state information, where the channel state information is determined based on the reference signal.

Optionally, the sending the channel state information includes: before receiving the first information, sending the channel state information.

Channel state measurement may be performed before the first information is received. For example, the terminal may receive a reference signal of the candidate secondary cell to complete channel state measurement, and may no longer perform channel state measurement after receiving the first information, thereby reducing the latency of secondary cell change.

Optionally, before receiving the first information, the method further includes: sending second information, where the second information indicates that the terminal supports performing primary cell handover and secondary cell change simultaneously.

A capability of the terminal is required for performing primary cell handover and secondary cell change simultaneously. Some terminals may not have such a capability. Therefore, after the terminal reports in advance that the terminal has the capability of performing primary cell handover and secondary cell change simultaneously, the terminal performs secondary cell change based on the first information. This can avoid a failure of secondary cell change caused because a terminal lack of the capability performs primary cell handover and secondary cell change simultaneously.

Optionally, the first information further includes a cell radio network temporary identifier (cell radio network temporary identifier, C-RNTI) of the terminal.

The terminal may obtain and store C-RNTIs of all candidate secondary cells in advance, and use a C-RNTI of a target secondary cell after secondary cell change is completed. However, the method increases signaling overheads. In this method, the first information carries a C-RNTI of a target secondary cell, and C-RNTIs of all candidate secondary cells do not need to be obtained and stored in advance, so that signaling overheads in a secondary cell change process can be reduced.

Optionally, the first information further includes an identifier of the second primary cell, and the identifier of the second primary cell is the same as an identifier of the first primary cell.

That the identifier of the second primary cell is the same as the identifier of the first primary cell may be understood by the terminal as that primary cell handover does not need to be performed, and only secondary cell change is to be performed. In this embodiment, a separate secondary cell change function is implemented by reusing an existing primary cell handover procedure, achieving better forward compatibility.

According to a second aspect, an embodiment of this application provides a method for cell handover. An execution body of the method may be a base station or a chip used in a base station. The following uses an example in which the execution body is the base station for description. The method includes: sending first information, where the first information indicates a terminal to change a primary cell from a first primary cell to a second primary cell, and the first information includes an identifier of a second secondary cell, the first information further indicates the terminal to change a secondary cell from a first secondary cell to the second secondary cell, and the first primary cell and the first secondary cell are serving cells of the terminal; and changing the primary cell from the first primary cell to the second primary cell, and changing the secondary cell from the first secondary cell to the second secondary cell.

The method according to the second aspect corresponds to the method according to the first aspect. For beneficial effects of embodiments in the second aspect, refer to the beneficial effects of the corresponding embodiments in the first aspect. Details are not described again.

Optionally, the method further includes: sending a downlink synchronization signal of the second secondary cell.

Optionally, the sending the downlink synchronization signal of the second secondary cell includes: before sending the first information, sending the downlink synchronization signal of the second secondary cell.

Optionally, the method further includes: sending a reference signal of the second secondary cell; and receiving channel state information, where the channel state information is determined based on the reference signal.

Optionally, the sending the reference signal of the second secondary cell includes: before sending the first information, sending the reference signal of the second secondary cell.

Optionally, before sending the first information, the method further includes: receiving second information, where the second information indicates that the terminal supports performing primary cell handover and secondary cell change simultaneously.

Optionally, the first information further includes a C-RNTI of the terminal.

Optionally, the first information further includes an identifier of the second primary cell, and the identifier of the second primary cell is the same as an identifier of the first primary cell.

According to a third aspect, an embodiment of this application provides another method for cell handover. An execution body of the method may be a terminal or a chip used in a terminal. The following uses an example in which the execution body is the terminal for description. The method includes: receiving third information, where the third information indicates the terminal to change a secondary cell from a first secondary cell to a second secondary cell; and changing the secondary cell from the first secondary cell to the second secondary cell based on the third information.

In this method, a secondary cell change process is decoupled from a primary cell handover process, and the terminal performs secondary cell change based on indication of the third information, and does not need to pay attention to whether a primary cell is changed. In comparison with a method of activating a secondary cell after primary cell handover is completed, the method can reduce a latency of secondary cell change.

Optionally, before the secondary cell is changed from the first secondary cell to the second secondary cell based on the third information, the method further includes: receiving a downlink synchronization signal of the second secondary cell; and performing cell search based on the downlink synchronization signal to obtain time-frequency synchronization with the second secondary cell.

Optionally, the receiving the downlink synchronization signal of the second secondary cell includes: before receiving the third information, receiving the downlink synchronization signal of the second secondary cell.

Downlink synchronization may be performed before the third information is received. For example, the terminal may receive a synchronization signal of a candidate secondary cell to complete downlink synchronization, and may no longer perform downlink synchronization after receiving the third information, thereby reducing the latency of secondary cell change.

Optionally, before the secondary cell is changed from the first secondary cell to the second secondary cell based on the third information, the method further includes: receiving a reference signal of the second secondary cell; and sending channel state measurement information, where the channel state measurement information is determined based on the reference signal.

Optionally, the receiving the reference signal of the second secondary cell includes: before receiving the third information, receiving the reference signal of the second secondary cell.

Channel state measurement may be performed before the third information is received. For example, the terminal may receive a reference signal of the candidate secondary cell to complete channel state measurement, and no longer perform channel state measurement after receiving the third information, thereby reducing the latency of secondary cell change.

Optionally, the third information includes a C-RNTI of the terminal.

The terminal may obtain and store C-RNTIs of all candidate secondary cells in advance, and use a C-RNTI of a target secondary cell after secondary cell change is completed. However, the method increases signaling overheads. In this method, the third information carries a C-RNTI of a target secondary cell, and C-RNTIs of all candidate secondary cells do not need to be obtained and stored in advance, so that signaling overheads in a secondary cell change process can be reduced.

According to a fourth aspect, an embodiment of this application provides another method for cell handover. An execution body of the method may be a base station or a chip used in a base station. The following uses an example in which the execution body is the base station for description. The method includes: sending third information, where the third information indicates a terminal to change a secondary cell from a first secondary cell to a second secondary cell; and changing the secondary cell from the first secondary cell to the second secondary cell.

The method according to the fourth aspect corresponds to the method according to the third aspect. For beneficial effects of embodiments in the fourth aspect, refer to the beneficial effects of the corresponding embodiments in the third aspect. Details are not described again.

Optionally, the method further includes: sending a downlink synchronization signal of the second secondary cell.

Optionally, the sending the downlink synchronization signal of the second secondary cell includes: before sending the third information, sending the downlink synchronization signal of the second secondary cell.

Optionally, the method further includes: sending a reference signal of the second secondary cell; and receiving channel state measurement information, where the channel state measurement information is determined based on the reference signal.

Optionally, the sending the reference signal of the second secondary cell includes: before sending the third information, sending the reference signal of the second secondary cell.

Optionally, the third information includes a C-RNTI of the terminal.

According to a fifth aspect, an embodiment of this application provides a communication apparatus. The communication apparatus may include a processing unit and a transceiver unit, configured to perform the method according to any one of the first aspect and the optional implementations of the first aspect or the method according to any one of the third aspect and the optional implementations of the third aspect. The transceiver unit is a sending unit when performing a sending step, and the transceiver unit is a receiving unit when performing a receiving step.

According to a sixth aspect, an embodiment of this application provides a communication apparatus. The communication apparatus may include a processing unit and a transceiver unit, configured to perform the method according to any one of the second aspect and the optional implementations of the second aspect or the method according to any one of the fourth aspect and the optional implementations of the fourth aspect. The transceiver unit is a sending unit when performing a sending step, and the transceiver unit is a receiving unit when performing a receiving step.

According to a seventh aspect, an embodiment of this application provides a communication apparatus. The communication apparatus may be a terminal, or may be a chip used in a terminal. The communication apparatus may include a processor, configured to perform the method according to any one of the first aspect and the optional implementations of the first aspect or the method according to any one of the third aspect and the optional implementations of the third aspect.

Optionally, the communication apparatus may further include a transceiver. When the communication apparatus is the terminal, the transceiver may be a transceiver circuit, an antenna, or the like. When the communication apparatus is the chip used in the terminal, the transceiver may be an input/output interface, a pin, a circuit, or the like.

Optionally, the communication apparatus may further include a memory. The memory is configured to store a computer program or instructions. The processor executes the computer program or the instructions stored in the memory, so that the communication apparatus performs the method according to any one of the first aspect and the optional implementations of the first aspect, or the communication apparatus performs the method according to any one of the third aspect and the optional implementations of the third aspect. When the communication apparatus is the terminal, the memory may be a read-only memory, a random access memory, or the like. When the communication apparatus is the chip used in the terminal, the memory may be a register, a cache, or the like.

According to an eighth aspect, an embodiment of this application provides a communication apparatus. The communication apparatus may be a base station, or may be a chip used in a base station. The communication apparatus may include a processor, configured to perform the method according to any one of the second aspect and the optional implementations of the second aspect or the method according to any one of the fourth aspect and the optional implementations of the fourth aspect.

Optionally, the communication apparatus may further include a transceiver. When the communication apparatus is the base station, the transceiver may be a transceiver circuit, an antenna, or the like. When the communication apparatus is the chip used in the base station, the transceiver may be an input/output interface, a pin, a circuit, or the like.

Optionally, the communication apparatus may further include a memory. The memory is configured to store a computer program or instructions. The processor executes the computer program or the instructions stored in the memory, so that the communication apparatus performs the method according to any one of the second aspect and the optional implementations of the second aspect, or the communication apparatus performs the method according to any one of the fourth aspect and the optional implementations of the fourth aspect. When the communication apparatus is the base station, the memory may be a read-only memory, a random access memory, or the like. When the communication apparatus is the chip used in the base station, the memory may be a register, a cache, or the like.

According to a ninth aspect, an embodiment of this application provides a communication system. The communication system includes the communication apparatus according to the fifth aspect and the communication apparatus according to the sixth aspect, or the communication apparatus according to the seventh aspect and the communication apparatus according to the eighth aspect.

According to a tenth aspect, an embodiment of this application provides a computer-readable storage medium. The computer-readable storage medium stores a computer program. When the computer program is executed on a communication apparatus, the communication apparatus is caused to perform: the method according to any one of the first aspect and the optional implementations of the first aspect, the method according to any one of the second aspect and the optional implementations of the second aspect, the method according to any one of the third aspect and the optional implementations of the third aspect, or the method according to any one of the fourth aspect and the optional implementations of the fourth aspect.

According to an eleventh aspect, an embodiment of this application provides a computer program product, where the computer program product includes computer program code or a computer program instruction, and when the computer program code or the computer program instruction is run by a communication apparatus, the communication apparatus is caused to perform: the method according to any one of the first aspect and the optional implementations of the first aspect, the method according to any one of the second aspect and the optional implementations of the second aspect, the method according to any one of the third aspect and the optional implementations of the third aspect, or the method according to any one of the fourth aspect and the optional implementations of the fourth aspect.

### BRIEF DESCRIPTION OF DRAWINGS

FIG. 1 is a diagram of an architecture of a communication system to which embodiments of this application are applied;
FIG. 2 is a diagram of a resource configuration of a tracking reference signal according to an embodiment of this application;
FIG. 3 is a diagram of a carrier aggregation scenario according to an embodiment of this application;
FIG. 4 is a diagram of a cell handover scenario according to an embodiment of this application;
FIG. 5 is a schematic flowchart of primary cell handover and secondary cell activation according to an embodiment of this application;
FIG. 6 is a schematic flowchart of a method for cell handover according to an embodiment of this application;
FIG. 7 is a schematic flowchart of primary cell handover and secondary cell change according to an embodiment of this application;
FIG. 8 is another schematic flowchart of primary cell handover and secondary cell change according to an embodiment of this application;
FIG. 9 is still another schematic flowchart of primary cell handover and secondary cell change according to an embodiment of this application;
FIG. 10 is a diagram of a secondary cell change scenario according to an embodiment of this application;
FIG. 11 is a schematic flowchart of another method for cell handover according to an embodiment of this application;
FIG. 12 is a schematic flowchart of secondary cell change according to an embodiment of this application;
FIG. 13 is another schematic flowchart of secondary cell change according to an embodiment of this application;
FIG. 14 is still another schematic flowchart of secondary cell change according to an embodiment of this application;
FIG. 15 is a diagram of a structure of a communication apparatus according to an embodiment of this application; and
FIG. 16 is a diagram of a structure of another communication apparatus according to an embodiment of this application.

### DESCRIPTION OF EMBODIMENTS

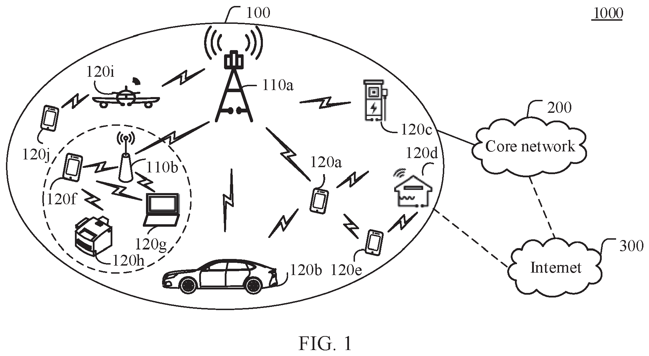

FIG. 1 is a diagram of an architecture of a communication system 1000 to which an embodiment of this application is applied. As shown in FIG. 1, the communication system includes a radio access network (radio access network, RAN) 100. The RAN 100 includes at least one RAN node (110a and 110b in FIG. 1, collectively referred to as 110), and may further include at least one terminal (120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may further include the foregoing two or more different radio access systems. The RAN 100 may alternatively be an open RAN (open RAN, O-RAN).

The RAN node, also referred to as a network device, a radio access network device, a RAN entity, or an access node, is configured to assist the terminal in accessing a communication system in a wireless manner.

In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access point (access point, AP) in the Wi-Fi system, an AP in a long range radio (long range radio, LoRa) system, or an AP in an internet of vehicles system, or the like. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to assist the terminal in implementing radio access, and different RAN nodes separately implement a part of functions of the base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a function of a part or all of physical layers. For specific descriptions of the foregoing protocol layers, refer to technical specifications related to 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU), an active antenna unit (active antenna unit, AAU), or a remote radio head (remote radio head, RRH). The CU may be further classified into two types of RAN nodes at a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses a base station as an example of the RAN node for description.

The terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, and a smart city. The terminal may be a mobile phone (for example, 120a, 120e, 120f, and 120j in FIG. 1), a tablet computer (for example, 120g in FIG. 1), a printer with a wireless transceiver function (for example, 120h in FIG. 1), a wearable device, a vehicle (for example, 120b in FIG. 1), a charger (for example, 120c in FIG. 1), an airplane (for example, 120i in FIG. 1), a ship, a robot, a mechanical arm, a smart home device (for example, 120d in FIG. 1). A specific technology and a specific device form that are used by the terminal are not limited in embodiments of this application.

By way of example but not limitation, in embodiments of this application, the wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on the body or integrated into clothes or an accessory of a user. The wearable device is a hardware device, and also implements a powerful function through software support, data exchange, and cloud interaction. In a broad sense, the wearable intelligent device includes full-featured and large-sized electronic devices that may implement complete or partial functions without depending on smartphones, such as smart watches or smart glasses, or electronic devices that are dedicated to only one type of application function and need to work with other devices such as the smartphones, such as various smart bands or smart jewelry for measuring physical signs.

If the various terminals described above are located in a vehicle (for example, placed in the vehicle or installed in the vehicle), the terminals may be all considered as vehicle-mounted terminals. For example, the vehicle-mounted terminal is also referred to as a vehicle-mounted module, a vehicle-mounted component, a vehicle-mounted chip, or an on-board unit (on-board unit, OBU).

The base station and the terminal may be at fixed positions or movable. The base station and the terminal may be deployed on land, including indoor devices, outdoor devices, handheld devices, or vehicle-mounted devices; may be deployed on water; or may be deployed on an airplane, a balloon, and a man-made satellite. Application scenarios of the base station and the terminal are not limited in embodiments of this application.

Roles of the base station and the terminal may be relative. For example, 120i in FIG. 1 (which may be a helicopter or an uncrewed aerial vehicle) may be configured as a mobile base station. For 120j accessing the radio access network 100 via 120i, 120i is a base station. However, for 110a, 120i is a terminal. In other words, 110a and 120i communicate with each other based on a wireless air interface protocol. Certainly, 110a and 120i may alternatively communicate with each other by using an interface protocol between the base stations. In this case, compared with 110a, 120i is also a base station. Therefore, both the base station and the terminal may be collectively referred to as communication apparatuses. 110a and 110b in FIG. 1 may be referred to as communication apparatuses having a function of the base station, and 120a to 120j in FIG. 1 may be referred to as communication apparatuses having a function of the terminal.

Communication may be performed between the base station and the terminal, between base stations, or between terminals by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In embodiments of this application, the function of the base station may alternatively be performed by a module (for example, a chip) in the base station, or may be performed by a control subsystem having the function of the base station. The control subsystem having the function of the base station herein may be a control center in the foregoing application scenarios such as the smart grid, the industrial control, the smart transportation, and the smart city. The function of the terminal may alternatively be performed by a module (for example, a chip or a modem) in the terminal, or may be performed by an apparatus having the function of the terminal.

In this embodiment of this application, the base station sends downlink information to the terminal, where the downlink information is carried on a downlink channel, and the downlink information may also be referred to as a downlink signal; and the terminal sends uplink information to the base station, where the uplink information is carried on an uplink channel, and the uplink information may also be referred to as an uplink signal. To communicate with the base station, the terminal needs to set up a wireless connection to a cell controlled by the base station. The cell that sets up the wireless connection to the terminal is referred to as a serving cell of the terminal.

For ease of understanding of embodiments of this application, concepts in embodiments of this application are briefly described below.

### 1. Time-frequency resources

In embodiments of this application, data or information may be carried by the time-frequency resources. The time-frequency resources may include resources in time domain and resources in frequency domain. In time domain, the time-frequency resources may include one or more time domain units (also referred to as time units). In frequency domain, the time-frequency resources may include one or more frequency domain units.

One time domain unit may be one symbol, one mini-slot (mini-slot), one slot (slot), or one subframe (subframe). Duration of one subframe in time domain may be one millisecond (ms). One slot may include 7 or 14 symbols. One mini-slot may include at least one symbol. The symbol may be an orthogonal frequency division multiplexing (orthogonal frequency division multiplexing, OFDM) symbol or a discrete Fourier transform spread orthogonal frequency division multiplexing (discrete Fourier transform spread OFDM, DFT-s-OFDM) symbol.

A frequency domain unit may be a subcarrier (subcarrier), a resource block (resource block, RB), a resource block group (resource block group, RBG), a subband (subband), a precoding resource block group (precoding resource block group, PRG), a bandwidth part (bandwidth part, BWP), a resource element (resource element, RE), a carrier, or a serving cell.

The time domain unit and the frequency domain unit listed above are merely intended to facilitate understanding of embodiments of this application, and do not limit the protection scope of this application. Specific forms of the time domain unit and the frequency domain unit are not limited in this application.

### 2. Measurement

Mobility management is an important part of wireless mobile communication, and measurement is the basis of mobility management. Mobility management is a general term of related content for ensuring continuity of a communication link between a base station and a terminal irrespective of movement of the terminal.

In an optional implementation, measurement may be classified into layer 1 (layer 1, L1) measurement, layer 2 (layer 2, L2) measurement, and layer 3 (layer 3, L3) measurement based on involved layers. The L1 measurement may also be referred to as physical layer measurement, the L2 measurement may also be referred to as MAC layer measurement, and the L3 measurement may also be referred to as radio resource control (radio resource control, RRC) layer measurement. The terminal may perform a specified type of measurement based on a measurement configuration.

The measurement configuration may include a measurement object. The measurement object may include, for example, a frequency and/or a cell identifier, where the cell identifier may include a cell global identifier (cell global identifier, CGI) or a physical cell identifier (physical cell identifier, PCI).

The measurement configuration may include a measurement timing configuration based on a synchronization signal and physical broadcast channel block (synchronization signal and physical broadcast channel block, SSB) (SSB-based measurement timing configuration, SMTC). The SMTC may include one or more of a periodicity, a length, and an offset of the SSB. Therefore, the terminal may receive the SSB based on the SMTC, and perform an operation such as measurement based on the SSB.

The measurement configuration may include valid measurement time. The valid measurement time may indicate a time length for which the terminal needs to perform measurement. After receiving the measurement configuration, the terminal may start a timer. Running duration of the timer may be the valid measurement time. When the timer is stopped or expires, the terminal may stop measurement based on parameters in the measurement configuration.

The measurement configuration may further include, for example, a valid measurement area. The valid measurement area may be indicated, for example, in a form of the cell identifier and/or an area identifier. The cell identifier may be the CGI. The area identifier may be, for example, a tracking area code (tracking area code, TAC) and/or a radio access network area code (RAN area code, RANAC). When the terminal moves out of the valid measurement area, the terminal may stop measurement performed based on the parameters in the measurement configuration.

For example, after the terminal obtains the valid measurement time and the valid measurement area, if the terminal moves out of the valid measurement area when the timer is running, the terminal may stop the timer and stop measurement performed based on the parameters in the measurement configuration.

It should be understood that the parameters included in the measurement configuration listed above are examples rather than limitations. The measurement configuration may include one or more parameters of the valid measurement time, the measurement object, SMTC corresponding to the measurement object, and the valid measurement area, and may further include more other parameters.

It should be noted that, a specific parameter of the measurement configuration may be configured by using one message, or may be configured by using different messages. This is not limited in this embodiment of this application. For example, the measurement object may be indicated in a measurement configuration carried in a system message, and the valid measurement time may be indicated in a measurement configuration carried in an RRC message (for example, an RRC release message or an RRC connection release message).

It should be further noted that, when receiving the measurement configuration in the RRC message and the measurement configuration in the system message, the terminal may preferentially use the measurement configuration in the RRC message. In comparison with the system message, the RRC message may be referred to as dedicated signaling used to send the measurement configuration. In other words, the terminal may preferentially use a parameter that is obtained from the RRC message and that is used for measurement. When the parameter (for example, the measurement object) configured in the RRC message is missing, the terminal may obtain the missing parameter from the system message.

Based on measurement, the terminal may obtain a measurement result of the measurement object. The measurement result may include the cell identifier and/or the frequency. Optionally, the measurement result may include signal quality of the cell. The signal quality may include at least one of received signal code power (received signal code power, RSCP), reference signal received power (reference signal received power, RSRP), reference signal receiving quality (reference signal receiving quality, RSRQ), a signal-to-noise ratio (signal-noise-ratio, SNR), a signal to interference plus noise ratio (signal to interference plus noise ratio, SINR), a reference signal strength indicator (reference signal strength indicator, RSSI), or other signal quality information. The signal quality may be cell-level, beam-level, SSB-level, numerology (numerology)-level, slicing (slicing)-level, or BWP-level.

The terminal may report the measurement result after accessing the cell. For example, the terminal may report the measurement result after receiving any one of an RRC setup (RRC setup) message, an RRC resume (RRC resume) message, an RRC connection setup (RRC connection setup) message, an RRC connection resume (RRC connection resume) message, or the like.

### (3) Tracking reference signal (tracking reference signal, TRS)

The 3GPP defines a channel state information reference signal (channel state information reference signal, CSI-RS) for tracking, and the reference signal is also referred to as the TRS.

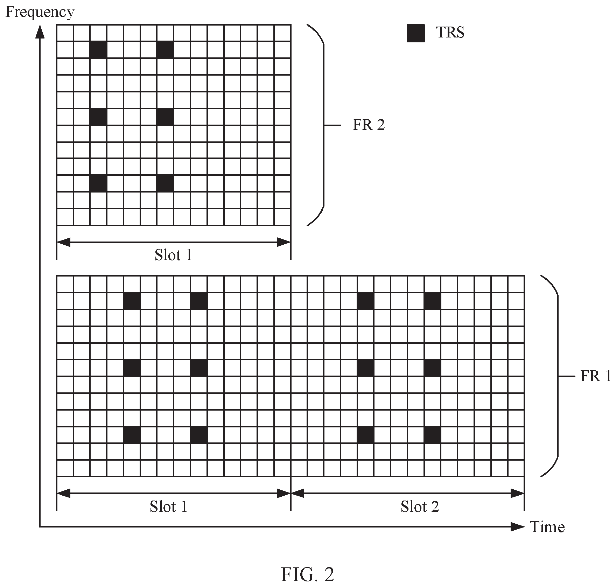

A TRS in an NR system is a special example of the CSI-RS, and is configured by using a non-zero power channel state information reference signal resource set (CSI-RS Resource Set). The CSI-RS resource set may also be referred to as a TRS resource set. Each CSI-RS resource set includes two or four CSI-RS resources. A CSI-RS resource is an RE that is used to send a CSI-RS on a symbol at a specific frequency domain density and bandwidth. Different CSI-RS resources have different symbol positions, but have a same transmit bandwidth, density, and frequency domain position. As shown in FIG. 2, for a frequency range (frequency range, FR) 1, each CSI-RS resource set includes four CSI-RS resources. The four CSI-RS resources are located in two slots (for example, a slot 1 and a slot 2 that are corresponding to an FR 1 frequency band shown in FIG. 2), and two CSI-RS resources located in a same slot are separated by three symbols. For an FR 2, each CSI-RS resource set includes two CSI-RS resources, and the two CSI-RS resources are separated by three symbols in one slot (for example, a slot 1 corresponding to the FR 2 frequency band shown in FIG. 2). It can be learned that, different CSI-RS resources have different symbol positions in a slot, but have a same transmit bandwidth, density, and frequency domain position.

There are two TRS sending modes. One is periodic sending. As shown in FIG. 2, each CSI-RS resource set (occupying two or four symbols) represents one TRS burst (burst) in one sending periodicity, and there is usually one TRS burst in one sending periodicity. The other TRS sending mode is aperiodic sending, in which sending of an aperiodic TRS (aperiodic tracking reference signal, A-TRS) may be triggered by using downlink control information (downlink control information, DCI).

The TRS is mainly used by a terminal for precise time-frequency synchronization. A base station configures a plurality of TRS resource sets for the terminal. Each TRS resource set and one SSB are in a Type C quasi co-location (quasi co-location, QCL) relationship. To be specific, the terminal may first perform coarse time-frequency synchronization based on the SSB, and then receive a TRS by using a channel parameter provided through coarse time-frequency synchronization, to obtain TRS channel information. A physical downlink control channel (physical downlink control channel, PDCCH) received by the terminal in a connected state and the TRS are in a QCL-typeA (QCL-TypeA) relationship, and a physical downlink shared channel (physical downlink shared channel, PDSCH) received by the terminal in the connected state and the TRS are also in the QCL-typeA relationship. Therefore, the TRS can provide precise time-frequency synchronization information for the PDCCH and the PDSCH.

In addition to precise time-frequency synchronization, the TRS can also be used by the terminal for automatic gain control (automatic gain control, AGC), signal-to-interference ratio (signal-to-interference ratio, SIR) estimation, and the like.

### 4. Carrier aggregation

The CA is a technology in which a single terminal performs data transmission by using a plurality of CCs together, and can implement large-bandwidth transmission, and effectively improve an uplink or downlink transmission rate. The terminal may determine, based on a capability of the terminal, a maximum quantity of CCs that can be used for transmission at the same time. For example, in a three-carrier aggregation scenario, the terminal may use three CCs at the same time.

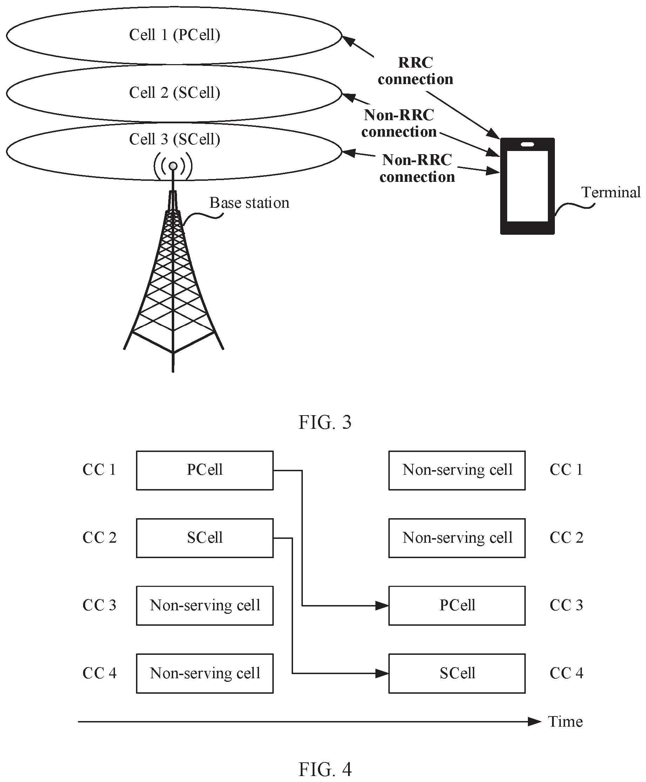

FIG. 3 is a diagram of a three-carrier aggregation scenario. In this scenario, a base station provides three CCs, and cells corresponding to the three CCs are a cell 1, a cell 2, and a cell 3. A terminal sets up an RRC connection to the cell 1. In this case, the cell 1 is a PCell, and a CC corresponding to the PCell is a PCC. The terminal sets up communication connections to the cell 2 and the cell 3 during RRC reconfiguration, and the communication connection is not an RRC connection. In this case, the cell 2 and the cell 3 are SCells, and a CC corresponding to the SCell is an SCC. The CA allows a PDCCH and a PDSCH to be carried on different CCs, that is, allows cross-carrier scheduling.

A quantity of CCs supported by the base station is generally greater than a quantity of CCs supported by the terminal. For example, the base station may support carrier aggregation of 16 downlink CCs, and the terminal usually supports carrier aggregation of two or three downlink CCs. However, the terminal may select two or three downlink CCs from the 16 downlink CCs for carrier aggregation. If a service is busy or a channel condition is poor on currently used CCs, the terminal may change the CCs, that is, change cells, to match a capability of the terminal and implement load balancing of the base station, thereby improving user experience.

In embodiments of this application, the carrier, the CC, and the cell are all concepts used to describe a frequency domain resource, and may be equivalently replaced with each other when there is no logical conflict.

### 5. Cell handover

A cell can be considered as a radio signal coverage area identified by a PCI or CGI. A coverage area of each base station may be divided into one or more cells. In embodiments of this application, different cells may be corresponding to different base stations. For example, a base station corresponding to a cell 1 and a base station corresponding to a cell 2 may be different base stations, that is, the cell 1 and the cell 2 may be managed by different base stations. Alternatively, the base station corresponding to the cell 1 and the base station corresponding to the cell 2 may be the same base station, that is, the cell 1 and the cell 2 may be managed by the same base station, which may be referred to as that the cell 1 and the cell 2 are co-sited. Optionally, when the cell 1 and the cell 2 are co-sited, the cell 1 and the cell 2 have a same baseband processing unit and intermediate frequency processing unit, but have different radio frequency processing units.

Cells that provide services for a terminal may be classified into a PCell and a SCell. Therefore, both the PCell and the SCell may be referred to as serving cells of the terminal. In a CA scenario, the base station may configure one PCell and one or more SCells for the terminal. The PCell is a cell in which the terminal maintains an RRC connection to the base station, and remaining serving cells of the terminal may be referred to as the SCells. The SCell may be flexibly activated/deactivated by using DCI or a MAC control element (control element, CE). After the RRC connection is set up, the base station may configure the SCell for the terminal to provide additional radio resources.

The foregoing descriptions about the cell are examples rather than limitations. With the development of technologies, concepts having same or similar functions as the cell may emerge. These concepts are also applicable to embodiments of this application.

Due to mobility of a terminal or variation of channel conditions, cells connected to the terminal may change. In other words, the terminal may perform a handover from one cell to another cell. A cell before handover may be referred to as a source cell or an anchor (anchor) cell, and a cell after handover may be referred to as a target cell. In an optional example, cell handover may be explained as follows: The terminal performs transmission in the target cell indicated by handover signaling and stops performing transmission in the source cell. Alternatively, cell handover may be explained as a switch of a transmission cell.

FIG. 4 is a diagram of a cell handover scenario. In FIG. 4, a terminal currently uses two carriers (CC 1 and CC 2) for communication, where a cell corresponding to CC 1 is a PCell, and a cell corresponding to CC 2 is an SCell. The terminal further supports communication by using CC 3 and CC 4, but CC 3 and CC 4 are not activated. Cells corresponding to CC 3 and CC 4 are non-serving cells (non-serving cells). As the terminal moves, channel states of CC 1 and CC 2 deteriorate, and the terminal may use CC 3 and CC 4 instead of CC 1 and CC 2 for communication. For example, the terminal hands over from the cell corresponding to CC 1 to the cell corresponding to CC 3, and hands over from the cell corresponding to CC 2 to the cell corresponding to CC 4. The cells corresponding to CC 1 and CC 2 are cells before handover, and may be referred to as source cells, and the cells corresponding to CC 3 and CC 4 are cells after handover, and may be referred to as target cells. After cell handover is completed, the cell corresponding to CC 3 is a PCell, the cell corresponding to CC 4 is an SCell, and the cells corresponding to CC 1 and CC 2 become non-serving cells. A process from CC 1 to CC 3 may be referred to as PCell handover, and a process from CC 2 to CC 4 may be referred to as SCell change, or a process from CC 2 to CC 4 may be referred to as SCell activation.

It should be understood that cell handover may be handover from a cell of a base station to a cell of another base station, or may be handover between different cells of a same base station. In addition, cell handover may be triggered by the base station, may be triggered by the terminal, or may be triggered by a third-party device other than the base station and the terminal.

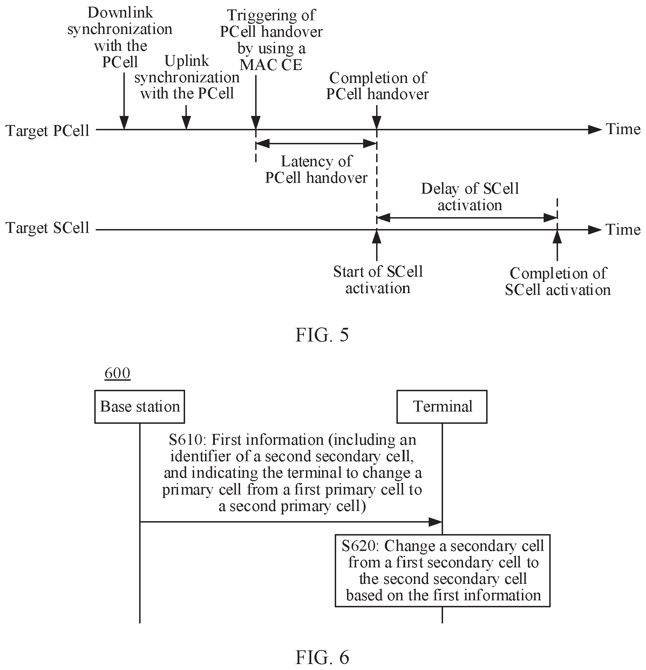

In the scenario shown in FIG. 4, the base station may use a MAC CE to trigger PCell handover. After PCell handover is completed, SCell activation may be completed through cell activation. Procedures of PCell handover and SCell activation are shown in FIG. 5.

In FIG. 5, the terminal may complete downlink synchronization and uplink synchronization with a target PCell before receiving a MAC CE indicating PCell handover, and perform PCell handover after receiving the MAC CE indicating PCell handover. A PCell handover process includes steps such as MAC CE processing, L2/L3 reconfiguration, baseband readjustment, and radio frequency readjustment. After PCell handover is completed, the base station sends, to the terminal, signaling (for example, the MAC CE) indicating to activate an SCell, and the terminal performs SCell activation based on the signaling for activating the SCell. An SCell activation process includes steps such as MAC CE parsing, a hybrid automatic repeat request (hybrid automatic repeat request, HARQ) process, an SSB-based or TRS-based activation process, and channel state information (channel state information, CSI) reporting.

In the handover procedure shown in FIG. 5, it takes a long period of time of about 20 ms to 55 ms from a start of PCell handover to activation of the target SCell, in which the terminal cannot perform communication through carrier aggregation, leading to a negative impact on user experience.

The following describes a method for cell handover provided in embodiments of this application with reference to the accompanying drawings.

FIG. 6 is a schematic flowchart of a method for cell handover according to an embodiment of this application. As shown in FIG. 6, in a method 600, serving cells of a terminal include a first primary cell and a first secondary cell, and the method 600 includes the following steps.

S610: The terminal receives first information, where the first information indicates the terminal to change a primary cell from the first primary cell to a second primary cell, and the first information includes an identifier of a second secondary cell.

Correspondingly, a base station generates and sends the first information.

In embodiments of this application, that "the first information indicates the terminal to change the primary cell from the first primary cell to the second primary cell" may also be expressed as that the first information indicates the terminal to transmit RRC signaling in the second primary cell; or may be expressed as that the first information indicates that an RRC connection between the terminal and the base station changes from the first primary cell to the second primary cell. Correspondingly, for the terminal or the base station, "changing the primary cell from the first primary cell to the second primary cell" may be expressed as transmitting the RRC signaling in the second primary cell; "changing the primary cell from the first primary cell to the second primary cell" may be expressed as transmitting RRC signaling in the second primary cell, and stopping transmitting RRC signaling in the first primary cell; or "changing the primary cell from the first primary cell to the second primary cell" may be expressed as transmitting RRC signaling in the second primary cell, where before the first information is received (or sent), the first primary cell is a primary serving cell, and after the first information is received (or sent), the second primary cell is a primary serving cell. "Changing a secondary cell from the first secondary cell to the second secondary cell" may be expressed as performing data transmission in the second secondary cell; "changing the secondary cell from the first secondary cell to the second secondary cell" may be expressed as performing data transmission in the second secondary cell, and stopping performing data transmission in the first secondary cell; or "changing the secondary cell from the first secondary cell to the second secondary cell" may be expressed as performing data transmission in the second secondary cell, where before the first information is received (or sent), the first secondary cell is a serving cell, and the second secondary cell is a non-serving cell; and after the first information is received (or sent), the first secondary cell is a non-serving cell, and the second secondary cell is a serving cell.

In embodiments of this application, that "the first information indicates the terminal to change the primary cell from the first primary cell to the second primary cell" may also be expressed as that the first information indicates the terminal to switch the primary cell to the second primary cell. Correspondingly, for the terminal or the base station, "changing the primary cell from the first primary cell to the second primary cell" may be expressed as switching the primary cell to the second primary cell; and "changing the secondary cell from the first secondary cell to the second secondary cell" may be expressed as switching the secondary cell to the second secondary cell, where "switching" may be interpreted as "changing".

The first information is information generated and sent by the base station corresponding to the first primary cell (that is, a source PCell). The first information may be an RRC message, a MAC CE, or DCI, or may be a field in an RRC message, a MAC CE, or DCI.

The first information may perform indication in an explicit manner, or may perform indication in an implicit manner. In the explicit manner, the first information may include a dedicated field, for example, a first field. When a value of the first field is "1", the first field indicates, together with an identifier of the second primary cell, the terminal to change from the first primary cell to the second primary cell. The identifier of the second primary cell may be separately sent to the terminal, or may be sent to the terminal together with the first field. When the value of the first field is "0", the first field indicates the terminal not to perform primary cell handover. In the implicit manner, a part of fields in the first information may be reused for indication. For example, the MAC CE may include the identifier of the second primary cell, the identifier of the second primary cell indicates a target PCell, and the identifier of the second primary cell in the first information may be reused. When the terminal receives the identifier of the second primary cell, the terminal determines to perform primary cell handover, and determines that the target PCell is the second primary cell.

A specific form of the first information and a sending mode of the first information are not limited in this embodiment of this application.

The identifier of the second secondary cell may be a PCI, a CGI, or a serving cell index (serving cell index), or may be other information used to identify the second secondary cell. A specific form of the identifier of the second secondary cell is not limited in this embodiment of this application.

The first information including the identifier of the second secondary cell further indicates the terminal to change from the first secondary cell to the second secondary cell, where the first information may perform indication in an explicit manner, or may perform indication in an implicit manner. In the explicit manner, the first information may include a dedicated field, for example, a second field. When a value of the second field is "1", the second field indicates, together with the identifier of the second secondary cell, the terminal to change from the first secondary cell to the second secondary cell. The identifier of the second secondary cell may be separately sent to the terminal, or may be sent to the terminal together with the second field. When the value of the second field is "0", the second field indicates the terminal not to perform secondary cell change. In the implicit manner, a part of fields in the first information may be reused for indication. For example, the identifier of the second secondary cell indicates a target SCell, and the identifier of the second secondary cell in the first information may be reused. When the terminal receives the identifier of the second secondary cell, the terminal determines to perform secondary cell change, and determines that the target SCell is the second secondary cell.

Before sending the first information, the base station may configure a candidate cell set, where the candidate cell set includes at least one candidate primary cell and/or at least one candidate secondary cell. Alternatively, the base station may configure two candidate cell sets, where one candidate cell set includes at least one candidate primary cell, and the other candidate cell set includes at least one candidate secondary cell. Using the former case as an example, the base station may configure, for the terminal by using the RRC message, a candidate cell set including four cells, where the four cells are a cell 1, a cell 2, a cell 3, and a cell 4. If the identifier of the second secondary cell carried in the first information is an identifier of the cell 4, the terminal may determine that the second secondary cell is the cell 4. Optionally, if the first information further carries the identifier of the second primary cell, and the identifier of the second primary cell is an identifier of the cell 3, the terminal may determine that the second primary cell is the cell 3. By preconfiguring the candidate cell set, the base station may configure a part of parameters of the target cell for the terminal in advance, thereby reducing a latency of cell handover.

After receiving the first information, the terminal may perform the following steps.

S620: Based on the first information, the terminal changes the primary cell from the first primary cell to the second primary cell, and changes the secondary cell from the first secondary cell to the second secondary cell.

Before changing to the second secondary cell, the terminal needs to perform operations such as downlink synchronization and channel state measurement. The terminal may complete downlink synchronization with the second primary cell before receiving the first information. Therefore, the terminal may determine a measurement configuration, for example, an SMTC, of the second secondary cell based on downlink synchronization information of the second primary cell. Then, the terminal receives a downlink synchronization signal (for example, an SSB) of the second secondary cell based on the measurement configuration of the second secondary cell, and performs operations such as downlink synchronization based on the downlink synchronization signal. The performing downlink synchronization may be performing cell search to obtain time-frequency synchronization with the second secondary cell.

In a cell handover process, a C-RNTI allocated by the base station to the terminal needs to be updated. For example, in a process in which the terminal changes from the first secondary cell to the second secondary cell, the C-RNTI of the terminal needs to be updated from a first C-RNTI (a C-RNTI allocated by the first secondary cell to the terminal) to a second C-RNTI (a C-RNTI allocated by the second secondary cell to the terminal). In one implementation, each candidate cell allocates a C-RNTI to the terminal, and before sending the first information, the first primary cell may send, to the terminal by using the RRC message, C-RNTIs that are allocated by all candidate cells to the terminal. In another implementation, the first information carries C-RNTIs that are allocated by target cells (for example, the second primary cell and the second secondary cell) to the terminal. Because a quantity of C-RNTIs carried in the first information is less than a quantity of C-RNTIs carried in the RRC message, in comparison with the former implementation, the latter implementation reduces signaling overheads caused by updating the C-RNTI.

After obtaining the measurement configuration of the second secondary cell and the C-RNTI allocated by the second secondary cell to the terminal, the terminal may perform an operation of changing to the second secondary cell. It can be learned that, in the method 600, secondary cell change and primary cell handover may be performed synchronously. In comparison with a method of activating a secondary cell after primary cell handover is completed, the method 600 can reduce a latency of secondary cell change.

Secondary cell change includes operations such as downlink synchronization and channel state measurement. Downlink synchronization and channel state measurement may be performed before the first information is received, or may be performed after the first information is received. The following describes different cases in detail. It should be noted that, operations (for example, synchronization and channel measurement) and an execution sequence of the operations mentioned in embodiments of this application are examples rather than limitations. Primary cell handover and secondary cell change may further include other operations. Specific operations in a primary cell handover process and a secondary cell change process are not limited in embodiments of this application.

Case 1: Downlink synchronization and channel state measurement are performed after the first information is received.

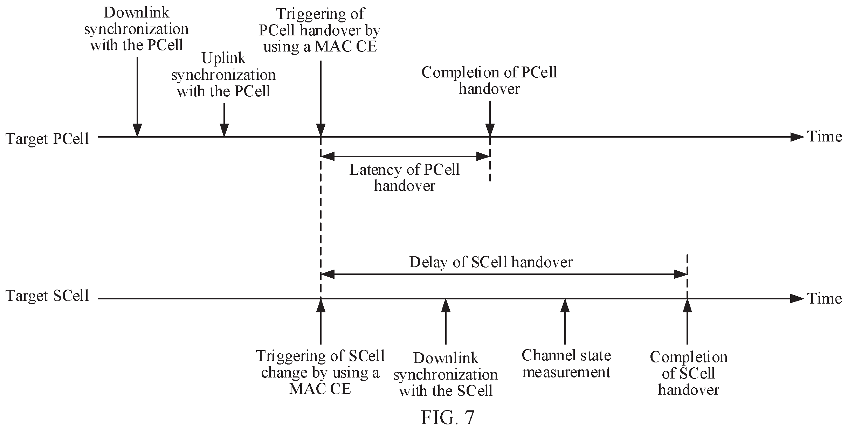

Optionally, in the method 600, a primary cell handover procedure and a secondary cell change procedure are shown in FIG. 7. In FIG. 7, the terminal may complete downlink synchronization and uplink synchronization with the second primary cell (that is, the target PCell) before receiving a MAC CE (an example of the first information) indicating primary cell handover. After receiving the MAC CE indicating primary cell handover, the terminal performs primary cell handover. For example, the base station may preconfigure candidate primary cells, and the terminal performs downlink synchronization and uplink synchronization with each candidate primary cell. The MAC CE carries the identifier of the second primary cell, and the second primary cell belongs to the preconfigured candidate primary cells. After receiving the MAC CE, the terminal may directly perform steps such as MAC CE parsing, L2/L3 reconfiguration, baseband readjustment, and radio frequency readjustment, and does not need to perform downlink synchronization and uplink synchronization with the second primary cell.

After receiving the MAC CE indicating primary cell handover, the terminal may receive an SSB, a periodic TRS (periodic TRS, P-TRS), or an A-TRS of the second secondary cell (that is, the target SCell), and perform operations such as AGC and downlink synchronization. In a downlink synchronization process, the terminal may first perform coarse synchronization, and then perform fine synchronization.

After completing downlink synchronization, the terminal may receive a reference signal of the second secondary cell, perform channel state measurement based on the reference signal, generate channel state information, and send the channel state information to the first primary cell. The reference signal is, for example, a CSI-RS, and the channel state information is, for example, CSI.

The foregoing channel state measurement may be semi-persistent measurement. To be specific, the base station configures a periodic CSI-RS resource in advance, and the MAC CE indicating primary cell handover is used to trigger the periodic CSI-RS resource to be validated. When receiving the MAC CE, the terminal starts to receive the CSI-RS on the periodic CSI-RS resource, and performs channel state measurement and reporting.

The foregoing channel state measurement may alternatively be aperiodic measurement. To be specific, the base station configures an aperiodic CSI-RS resource in advance, and the MAC CE indicating primary cell handover carries an indication for triggering aperiodic CSI measurement. When receiving the MAC CE, the terminal starts to receive the CSI-RS on the aperiodic CSI-RS resource, and performs channel state measurement and reporting, so that the base station obtains the channel state information early.

After obtaining the channel state information, the base station considers that secondary cell change is completed.

Based on the procedure shown in FIG. 7, a start moment of a latency of secondary cell change may be defined as a moment at which the terminal receives the MAC CE indicating primary cell handover, and an end moment of the latency of secondary cell change may be defined as a moment at which the terminal sends the channel state information. The latency of secondary cell change includes: time in which the terminal parses the MAC CE, time in which the terminal feeds back a MAC CE receiving state based on a HARQ, time in which the terminal performs downlink synchronization based on the SSB or the A-TRS, time in which the terminal performs channel state measurement and reporting, and the like.

Case 2: Downlink synchronization is performed before the first information is received, and channel state measurement is performed after the first information is received.

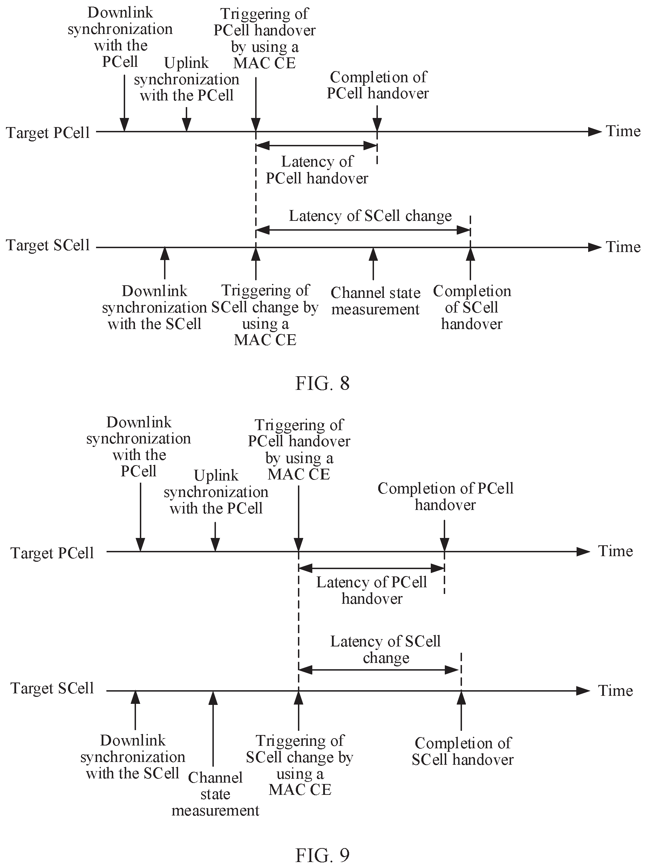

Optionally, in the method 600, a primary cell handover procedure and a secondary cell change procedure are shown in FIG. 8. In FIG. 8, the terminal may complete downlink synchronization and uplink synchronization with the second primary cell (that is, the target PCell) before receiving a MAC CE indicating primary cell handover. After receiving the MAC CE indicating primary cell handover, the terminal performs primary cell handover. For example, the base station may preconfigure candidate primary cells, and the terminal performs downlink synchronization and uplink synchronization with each candidate primary cell. The MAC CE carries the identifier of the second primary cell, and the second primary cell belongs to the preconfigured candidate primary cells. After receiving the MAC CE, the terminal may directly perform steps such as MAC CE parsing, L2/L3 reconfiguration, baseband readjustment, and radio frequency readjustment, and does not need to perform downlink synchronization and uplink synchronization with the second primary cell.

The terminal may complete downlink synchronization with the second secondary cell (that is, the target SCell) before receiving the MAC CE indicating primary cell handover. For example, the base station may preconfigure candidate secondary cells, and the terminal performs downlink synchronization with each candidate secondary cell. The MAC CE carries the identifier of the second secondary cell, and the second secondary cell belongs to the preconfigured candidate secondary cells. After receiving the MAC CE, the terminal may directly perform steps such as MAC CE parsing and channel state measurement, and does not need to perform downlink synchronization with the second secondary cell, thereby reducing the latency of secondary cell change.

Optionally, before receiving the MAC CE indicating primary cell handover, the terminal may receive an SSB of the second secondary cell, and perform a coarse downlink synchronization operation based on the SSB. After completing coarse downlink synchronization, the terminal may receive the SSB, a P-TRS, or an A-TRS of the second secondary cell, and perform operations such as fine downlink synchronization.

After receiving the MAC CE indicating primary cell handover, the terminal may receive a reference signal of the second secondary cell, perform channel state measurement based on the reference signal, generate channel state information, and send the channel state information to the first primary cell. The reference signal is, for example, a CSI-RS, and the channel state information is, for example, CSI.

The foregoing channel state measurement may be semi-persistent measurement. To be specific, the base station configures a periodic CSI-RS resource in advance, and the MAC CE indicating primary cell handover is used to trigger the periodic CSI-RS resource to be validated. When receiving the MAC CE, the terminal starts to receive the CSI-RS on the periodic CSI-RS resource, and performs channel state measurement and reporting.

The foregoing channel state measurement may alternatively be aperiodic measurement. To be specific, the base station configures an aperiodic CSI-RS resource in advance, and the MAC CE indicating primary cell handover carries an indication for triggering aperiodic CSI measurement. When receiving the MAC CE, the terminal starts to receive the CSI-RS on the aperiodic CSI-RS resource, and performs channel state measurement and reporting, so that the base station obtains the channel state information early.

After obtaining the channel state information, the base station considers that secondary cell change is completed.

Based on the procedure shown in FIG. 8, a start moment of a latency of secondary cell change may be defined as a moment at which the terminal receives the MAC CE indicating primary cell handover, and an end moment of the latency of secondary cell change may be defined as a moment at which the terminal sends the channel state information. The latency of secondary cell change includes: time in which the terminal parses the MAC CE, time in which the terminal feeds back a MAC CE receiving state based on a HARQ, time in which the terminal performs channel state measurement and reporting, and the like. In FIG. 8, the latency of secondary cell change may be greater than a latency of primary cell handover, may be less than the latency of primary cell handover, or may be equal to the latency of primary cell handover.

Case 3: Downlink synchronization and channel state measurement are performed before the first information is received.

Optionally, in the method 600, a primary cell handover procedure and a secondary cell change procedure are shown in FIG. 9. In FIG. 9, the terminal may complete downlink synchronization and uplink synchronization with the second primary cell (that is, the target PCell) before receiving a MAC CE indicating primary cell handover. After receiving the MAC CE indicating primary cell handover, the terminal performs primary cell handover. For example, the base station may preconfigure candidate primary cells, and the terminal performs downlink synchronization and uplink synchronization with each candidate primary cell. The MAC CE carries the identifier of the second primary cell, and the second primary cell belongs to the preconfigured candidate primary cells. After receiving the MAC CE, the terminal may directly perform steps such as MAC CE parsing, L2/L3 reconfiguration, baseband readjustment, and radio frequency readjustment, and does not need to perform downlink synchronization and uplink synchronization with the second primary cell.

The terminal may complete downlink synchronization with the second secondary cell (that is, the target SCell) before receiving the MAC CE indicating primary cell handover. For example, the base station may preconfigure candidate secondary cells, and the terminal performs downlink synchronization with each candidate secondary cell. The MAC CE carries the identifier of the second secondary cell, and the second secondary cell belongs to the preconfigured candidate secondary cells. After receiving the MAC CE, the terminal may directly perform steps such as MAC CE parsing, and does not need to perform downlink synchronization with the second secondary cell and channel state measurement, thereby reducing a latency of secondary cell change.

Optionally, before receiving the MAC CE indicating primary cell handover, the terminal may receive an SSB of the second secondary cell, and perform a coarse downlink synchronization operation based on the SSB. After completing coarse downlink synchronization, the terminal may receive the SSB, a P-TRS, or an A-TRS of the second secondary cell, and perform operations such as fine downlink synchronization.

Before receiving the MAC CE indicating primary cell handover and after completing fine downlink synchronization, the terminal may receive a reference signal of the second secondary cell, perform channel state measurement based on the reference signal, generate channel state information, and send the channel state information to the first primary cell. The reference signal is, for example, a CSI-RS, and the channel state information is, for example, CSI.

The foregoing channel state measurement may be semi-persistent measurement. To be specific, the base station configures a periodic CSI-RS resource in advance, and the MAC CE indicating primary cell handover is used to trigger the periodic CSI-RS resource to be validated. When receiving the MAC CE, the terminal starts to receive the CSI-RS on the periodic CSI-RS resource, and performs channel state measurement and reporting.

The foregoing channel state measurement may alternatively be aperiodic measurement. To be specific, the base station configures an aperiodic CSI-RS resource in advance, and the MAC CE indicating primary cell handover carries an indication for triggering aperiodic CSI measurement. When receiving the MAC CE, the terminal starts to receive the CSI-RS on the aperiodic CSI-RS resource, and performs channel state measurement and reporting, so that the base station obtains the channel state information early.

After obtaining the channel state information, the base station considers that secondary cell change is completed.

Based on the procedure shown in FIG. 9, a start moment of a latency of secondary cell change may be defined as a moment at which the terminal receives the MAC CE indicating primary cell handover, and an end moment of the latency of secondary cell change may be defined as a moment at which the terminal sends the channel state information. The latency of secondary cell change includes: time in which the terminal parses the MAC CE, time in which the terminal feeds back a MAC CE receiving state based on a HARQ, and the like. In FIG. 9, the latency of secondary cell change may be greater than a latency of primary cell handover, may be less than the latency of primary cell handover, or may be equal to the latency of primary cell handover.

Optionally, in the method 600, before receiving the first information, the terminal may further perform the following step:
sending second information, where the second information indicates that the terminal supports performing primary cell handover and secondary cell change simultaneously.

A capability of the terminal is required for performing primary cell handover and secondary cell change simultaneously. Some terminals may not have such a capability. Therefore, after the terminal reports in advance that the terminal has the capability of performing primary cell handover and secondary cell change simultaneously, the terminal performs secondary cell change based on the first information. This can avoid a failure of secondary cell change caused by a lack of the capability. For example, if a terminal does not have the capability of performing primary cell handover and secondary cell change simultaneously, and the terminal does not report the second information, the base station may consider by default that the terminal has the capability of performing primary cell handover and secondary cell change simultaneously. After sending primary cell handover signaling, the base station no longer sends secondary cell activation signaling. In this case, the terminal cannot complete secondary cell activation, and cannot perform communication in a target secondary cell.

The second information may perform indication in an explicit manner, or may perform indication in an implicit manner. In the explicit manner, the second information may include a dedicated field, for example, a third field. When a value of the third field is "1", the third field indicates that the terminal supports performing primary cell handover and secondary cell change simultaneously. When the value of the third field is "0", the third field indicates that the terminal does not support performing primary cell handover and secondary cell change simultaneously. In the implicit manner, a part of fields in the second information may be reused for indication, and some information formats or information types in the second information may be reused for indication. For example, when a format of a piece of information sent by the terminal to the base station is a format A, it indicates that the terminal supports performing primary cell handover and secondary cell change simultaneously. When a format of a piece of information sent by the terminal to the base station is a format B, it indicates that the terminal does not support performing primary cell handover and secondary cell change simultaneously.

A specific form of the second information and a sending mode of the second information are not limited in this embodiment of this application.

After the terminal sends the second information, the base station may perform processing based on content indicated by the second information. For example, when the second information indicates that the terminal supports preforming primary cell handover and secondary cell change simultaneously, the base station may configure, for the terminal before sending the first information, a resource required for secondary cell change, for example, a downlink synchronization resource and/or a channel state measurement resource of a secondary cell.

Optionally, the terminal may further report whether the terminal supports performing downlink synchronization with the secondary cell and/or channel state measurement of the secondary cell in advance. If the terminal supports performing downlink synchronization with the secondary cell in advance (or the terminal supports performing downlink synchronization with the secondary cell before receiving the first information, or the terminal supports performing downlink synchronization with the secondary cell when the secondary cell is in a deactivated state), the base station may configure, for the terminal before sending the first information, a resource (for example, a configuration parameter of an SSB) required for downlink synchronization with the secondary cell. Alternatively, if the terminal supports performing channel state measurement in advance (or the terminal supports performing channel state measurement of the secondary cell before receiving the first information, or the terminal supports performing channel state measurement of the secondary cell when the secondary cell is in a deactivated state), the base station may configure, for the terminal before sending the first information, a resource (for example, a configuration parameter of an CSI-RS) required for channel state measurement of the secondary cell.

The foregoing uses handover between two secondary cells as an example for description. However, an application scenario of the method 600 is not limited thereto, and the method 600 may be further applied to a scenario of handover between more secondary cells.

For example, the serving cell of the terminal further includes a third secondary cell, and the first information may further include an identifier of a fourth secondary cell. After receiving the first information, the terminal determines to change from the first secondary cell and the third secondary cell to the second secondary cell and the fourth secondary cell. Handover between a plurality of secondary cells may be performed simultaneously or separately. In other words, the terminal may simultaneously perform an operation of changing from the first secondary cell to the second secondary cell and an operation of changing from the third secondary cell to the fourth secondary cell; the terminal may first perform an operation of changing from the first secondary cell to the second secondary cell, and then perform an operation of changing from the third secondary cell to the fourth secondary cell; or the terminal may first perform an operation of changing from the third secondary cell to the fourth secondary cell, and then perform an operation of changing from the first secondary cell to the second secondary cell.

Optionally, the first information further includes the identifier of the second primary cell, and the identifier of the second primary cell is the same as an identifier of the first primary cell.

That the identifier of the second primary cell is the same as the identifier of the first primary cell may be understood by the terminal as that primary cell handover does not need to be performed, and only secondary cell change is to be performed.

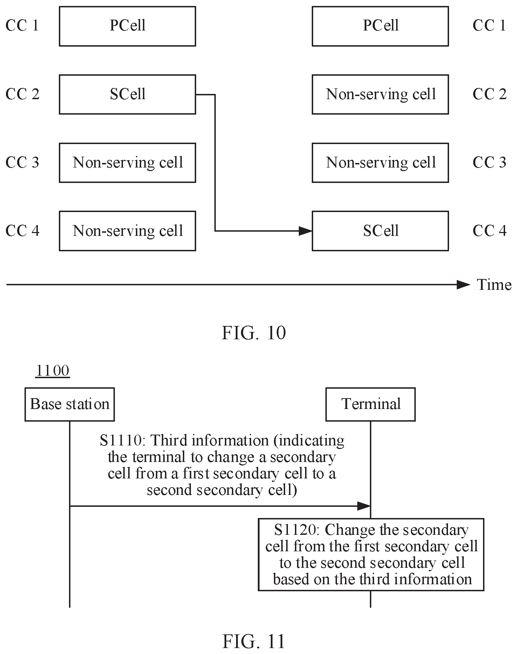

As shown in FIG. 10, a terminal currently uses two carriers (a CC 1 and a CC 2) for communication, where a cell corresponding to CC 1 is a PCell, and a cell corresponding to CC 2 is an SCell. The terminal further supports communication by using a CC 3 and a CC 4, but CC 3 and CC 4 are not activated. Cells corresponding to CC 3 and CC 4 are non-serving cells (non-serving cells). As the terminal moves, a channel state of CC 2 deteriorates, and the terminal may use CC 1 and CC 4 for communication, and no longer use CC 1 and CC 2 for communication. For example, the base station sends the first information to the terminal, where the first information includes the identifier of the second primary cell and the identifier of the second secondary cell, the identifier of the second secondary cell is a cell identifier corresponding to CC 4, and the identifier of the second primary cell is a cell identifier corresponding to CC 1 (that is, an identifier of a current source PCell). After receiving the first information, the terminal obtains the identifier of the second primary cell from the first information. If determining that the identifier of the second primary cell is the same as the cell identifier corresponding to CC 1, the terminal determines not to perform primary cell handover, and only performs secondary cell change. After cell handover is completed, the PCell is still the cell corresponding to CC 1, and the SCell is changed to the cell corresponding to CC 4. In this way, a separate secondary cell change function is implemented without a need of changing an existing primary cell handover procedure, achieving better forward compatibility.

FIG. 11 shows another method for cell handover according to an embodiment of this application. The method 1100 includes the following steps.

S1110: A terminal receives third information, where the third information indicates the terminal to change a secondary cell from a first secondary cell to a second secondary cell.

Correspondingly, a base station generates and sends the third information.

In embodiments of this application, that "the third information indicates the terminal to change the secondary cell from the first secondary cell to the second secondary cell" may also be expressed as that the third information indicates the terminal to perform transmission in the second secondary cell. Correspondingly, for the terminal or the base station, "changing the secondary cell from the first secondary cell to the second secondary cell" may be expressed as performing transmission in the second secondary cell.

In embodiments of this application, that "the third information indicates the terminal to change the secondary cell from the first secondary cell to the second secondary cell" may also be expressed as that the third information indicates the terminal to switch the secondary cell to the second secondary cell. Correspondingly, for the terminal or the base station, "changing the secondary cell from the first secondary cell to the second secondary cell" may be expressed as switching the secondary cell to the second secondary cell, where "switching" may be interpreted as "changing".

The third information may be information generated and sent by the base station corresponding to a primary cell. The third information may be an RRC message, a MAC CE, or DCI, or the third information may be a field in an RRC message, a MAC CE, or DCI.

The third information may perform indication in an explicit manner, or may perform indication in an implicit manner. In the explicit manner, the third information may include a dedicated field, for example, a fourth field. When a value of the fourth field is "1", the fourth field indicates, together with an identifier of the second secondary cell, the terminal to change from the first secondary cell to the second secondary cell. The identifier of the second secondary cell may be separately sent to the terminal, or may be sent to the terminal together with the second field. When the value of the fourth field is "0", the fourth field indicates the terminal not to perform secondary cell change. In the implicit manner, a part of fields in the third information may be reused for indication. For example, the MAC CE may include the identifier of the second secondary cell, and the identifier of the second secondary cell indicates a target SCell, and the identifier of the second secondary cell in the third information may be reused. When the terminal receives the identifier of the second secondary cell, the terminal determines to perform secondary cell change, and determines that the target SCell is the second secondary cell.

A specific form of the third information and a sending mode of the third information are not limited in this embodiment of this application.

Before sending the third information, the base station may configure a candidate cell set, where the candidate cell set includes at least one candidate primary cell and/or at least one candidate secondary cell. Alternatively, the base station may configure two candidate cell sets, where one candidate cell set includes at least one candidate primary cell, and the other candidate cell set includes at least one candidate secondary cell. Using the latter case as an example, the base station may configure, for the terminal by using the RRC message, a candidate secondary cell set including four cells, where the four cells are a cell 1, a cell 2, a cell 3, and a cell 4. If the identifier of the second secondary cell carried in the third information is an identifier of the cell 4, the terminal may determine that the second secondary cell is the cell 4. By preconfiguring the candidate secondary cell set, the base station may configure a part of parameters of a target secondary cell for the terminal in advance, thereby reducing a latency of secondary cell change.

After receiving the third information, the terminal may perform the following steps.

S1120: The terminal hands over the secondary cell from the first secondary cell to the second secondary cell based on the third information.

Before changing to the second secondary cell, the terminal needs to perform operations such as downlink synchronization and channel state measurement. The terminal may obtain a measurement configuration of the second secondary cell from the primary cell before receiving the third information, for example, an SMTC. Then, the terminal receives a downlink synchronization signal (for example, an SSB) of the second secondary cell based on the measurement configuration of the second secondary cell, and performs operations such as downlink synchronization based on the downlink synchronization signal. The performing downlink synchronization may be performing cell search to obtain time-frequency synchronization with the second secondary cell.

In a cell handover process, a C-RNTI allocated by the base station to the terminal needs to be updated. For example, in a process in which the terminal changes from the first secondary cell to the second secondary cell, the C-RNTI of the terminal needs to be updated from a first C-RNTI (a C-RNTI allocated by the first secondary cell to the terminal) to a second C-RNTI (a C-RNTI allocated by the second secondary cell to the terminal). In one implementation, each candidate secondary cell allocates a C-RNTI to the terminal, and before sending the third information, the base station may send, to the terminal by using the RRC message, C-RNTIs that are allocated by all candidate secondary cells to the terminal. In another implementation, the third information carries C-RNTIs that are allocated by target secondary cells to the terminal. Because a quantity of C-RNTIs carried in the third information is less than a quantity of C-RNTIs carried in the RRC message, in comparison with the former implementation, the latter implementation reduces signaling overheads caused by updating the C-RNTI.

In the method 1100, a secondary cell change process is decoupled from a primary cell handover process, and the terminal performs secondary cell change based on indication of the third information, and does not need to pay attention to whether the primary cell is changed. In comparison with a method of activating a secondary cell after primary cell handover is completed, the method 1100 can reduce a latency of secondary cell change. For a cell change state before and after the terminal performs the method 1100, refer to FIG. 10.

It should be noted that, some concepts in the method 1100 are the same as some concepts in the method 600, and meanings of the same concepts are the same. For example, the identifier of the second secondary cell in the method 1100 is the same as the identifier of the second secondary cell in the method 600, and the same as the meaning of the identifier of the second secondary cell in the method 600 may be used in the meaning of the identifier of the second secondary cell in the method 1100. In the following, meanings of concepts such as "the reference signal of the second secondary cell" and "channel state measurement" may also be the same as meanings of corresponding concepts in the method 600, and meanings of the same concepts are not described again.

Secondary cell change includes operations such as downlink synchronization and channel state measurement. Downlink synchronization and channel state measurement may be performed before the third information is received, or may be performed after the third information is received. The following describes different cases in detail. It should be noted that, operations (for example, synchronization and channel measurement) and an execution sequence of the operations mentioned in embodiments of this application are examples rather than limitations. Secondary cell change may further include other operations. Specific operations in a secondary cell change process are not limited in embodiments of this application.

Case 4: Downlink synchronization and channel state measurement are performed after the third information is received.

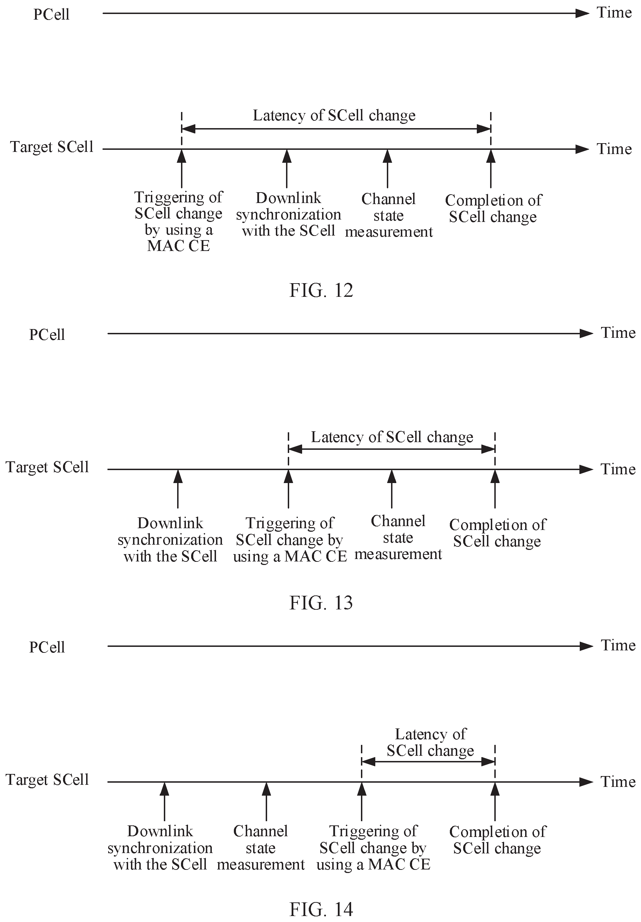

Optionally, in the method 1100, a secondary cell change procedure is shown in FIG. 12. In FIG. 12, after receiving the MAC CE (an example of the third information) indicating secondary cell change, the terminal may receive the SSB, a P-TRS, or an A-TRS of a second secondary cell (that is, the target SCell), and perform operations such as AGC and downlink synchronization. In a downlink synchronization process, the terminal may first perform coarse synchronization, and then perform fine synchronization.

After completing downlink synchronization, the terminal may receive the reference signal of the second secondary cell, perform channel state measurement based on the reference signal, generate channel state information, and send the channel state information to the primary cell. The reference signal is, for example, a CSI-RS, and the channel state information is, for example, CSI.

After obtaining the channel state information, the base station considers that secondary cell change is completed.

Based on the procedure shown in FIG. 12, a start moment of a latency of secondary cell change may be defined as a moment at which the terminal receives the MAC CE indicating secondary cell change, and an end moment of the latency of secondary cell change may be defined as a moment at which the terminal sends the channel state information. The latency of secondary cell change includes: time in which the terminal parses the MAC CE, time in which the terminal feeds back a MAC CE receiving state based on a HARQ, time in which the terminal performs downlink synchronization based on the SSB or the A-TRS, time in which the terminal performs channel state measurement and reporting, and the like.

Case 5: Downlink synchronization is performed before the third information is received, and channel state measurement is performed after the third information is received.

Optionally, in the method 1100, a secondary cell change procedure is shown in FIG. 13. In FIG. 13, the terminal may complete downlink synchronization with the second secondary cell (that is, the target SCell) before receiving the MAC CE indicating secondary cell change. For example, the base station may preconfigure candidate secondary cells, and the terminal performs downlink synchronization with each candidate secondary cell. The MAC CE carries the identifier of the second secondary cell, and the second secondary cell belongs to the preconfigured candidate secondary cells. After receiving the MAC CE, the terminal may directly perform steps such as MAC CE parsing and channel state measurement, and does not need to perform downlink synchronization with the second secondary cell, thereby reducing the latency of secondary cell change.

Optionally, before receiving the MAC CE indicating secondary cell change, the terminal may receive an SSB of the second secondary cell, and perform a coarse downlink synchronization operation based on the SSB. After completing coarse downlink synchronization, the terminal may receive the SSB, the P-TRS, or the A-TRS of the second secondary cell, and perform operations such as fine downlink synchronization.

After receiving the MAC CE indicating secondary cell change, the terminal may receive a reference signal of the second secondary cell, perform channel state measurement based on the reference signal, generate channel state information, and send the channel state information to the primary cell. The reference signal is, for example, a CSI-RS, and the channel state information is, for example, CSI.

After obtaining the channel state information, the base station considers that secondary cell change is completed.

Based on the procedure shown in FIG. 13, a start moment of a latency of secondary cell change may be defined as a moment at which the terminal receives the MAC CE indicating secondary cell change, and an end moment of the latency of secondary cell change may be defined as a moment at which the terminal sends the channel state information. The latency of secondary cell change includes: time in which the terminal parses the MAC CE, time in which the terminal feeds back a MAC CE receiving state based on a HARQ, time in which the terminal performs channel state measurement and reporting, and the like.

Case 6: Downlink synchronization and channel state measurement are performed before the third information is received.

Optionally, in the method 1100, a secondary cell change procedure is shown in FIG. 14. In FIG. 14, the terminal may complete downlink synchronization with the second secondary cell (that is, the target SCell) before receiving the MAC CE indicating secondary cell change. For example, the base station may preconfigure candidate secondary cells, and the terminal performs downlink synchronization with each candidate secondary cell. The MAC CE carries the identifier of the second secondary cell, and the second secondary cell belongs to the preconfigured candidate secondary cells. After receiving the MAC CE, the terminal may directly perform steps such as MAC CE parsing, and does not need to perform downlink synchronization with the second secondary cell and channel state measurement, thereby reducing the latency of secondary cell change.

Optionally, before receiving the MAC CE indicating secondary cell change, the terminal may receive an SSB of the second secondary cell, and perform a coarse downlink synchronization operation based on the SSB. After completing coarse downlink synchronization, the terminal may receive the SSB, the P-TRS, or the A-TRS of the second secondary cell, and perform operations such as fine downlink synchronization.

Before receiving the MAC CE indicating secondary cell change and after completing fine downlink synchronization, the terminal may receive a reference signal of the second secondary cell, perform channel state measurement based on the reference signal, generate channel state information, and send the channel state information to the primary cell. The reference signal is, for example, a CSI-RS, and the channel state information is, for example, CSI.

After obtaining the channel state information, the base station considers that secondary cell change is completed.

Based on the procedure shown in FIG. 14, a start moment of a latency of secondary cell change may be defined as a moment at which the terminal receives the MAC CE indicating secondary cell change, and an end moment of the latency of secondary cell change may be defined as a moment at which the terminal sends the channel state information. The latency of secondary cell change includes: time in which the terminal parses the MAC CE, time in which the terminal feeds back a MAC CE receiving state based on a HARQ, and the like.

The foregoing describes in detail the method examples provided in embodiments of this application. It may be understood that, to implement the foregoing functions, the corresponding apparatuses include corresponding hardware structures and/or software modules for performing the functions. A person of ordinary skill in the art should easily be aware that, in combination with units, algorithms, and steps in the examples described in embodiments disclosed in this specification, this application can be implemented by hardware or a combination of hardware and computer software. Whether a function is performed by hardware in a manner of hardware driven by computer software depends on particular applications and design constraint conditions of the technical solutions. A person skilled in the art may use different methods to implement the described functions for each particular application, but it should not be considered that the implementation goes beyond the scope of this application.

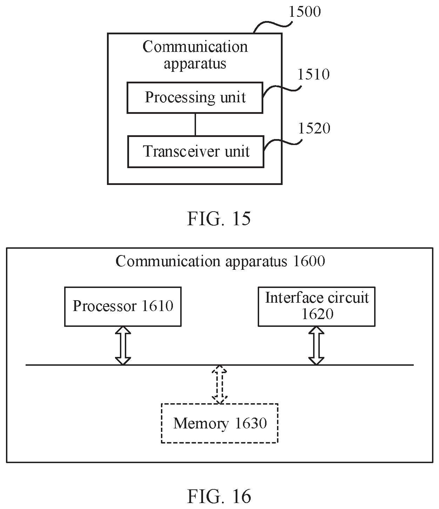

FIG. 15 and FIG. 16 are diagrams of structures of two possible communication apparatuses according to an embodiment of this application. The communication apparatuses may be configured to implement functions of the terminal or the base station in the foregoing method embodiments, thereby having beneficial effects of the foregoing method embodiments. In embodiments of this application, the communication apparatuses may be the terminal shown in FIG. 1, may be the base station shown in FIG. 1, or may be a module (for example, a chip) used in the terminal or the base station.

As shown in FIG. 15, a communication apparatus 1500 includes a processing unit 1510 and a transceiver unit 1520. The transceiver unit 1520 performs a receiving step and/or a sending step under control of the processing unit 1510. The transceiver unit 1520 is a sending unit when performing a sending step, and the transceiver unit 1520 is a receiving unit when performing a receiving step. The communication apparatus 1500 is configured to implement the functions of the terminal or the base station in the method embodiment shown in FIG. 6 or FIG. 11.

When the communication apparatus 1500 is configured to implement the function of the terminal in the method embodiment in FIG. 6, the transceiver unit 1520 is configured to: receive first information, where the first information indicates the terminal to change a primary cell from a first primary cell to a second primary cell, and the first information includes an identifier of a second secondary cell; and the processing unit 1510 is configured to: based on the first information, change the primary cell from the first primary cell to the second primary cell, and change a secondary cell from a first secondary cell to the second secondary cell.

Optionally, before the first secondary cell is changed to the second secondary cell based on the first information, the transceiver unit 1520 is further configured to: receive a downlink synchronization signal of the second secondary cell; and the processing unit 1510 is further configured to: perform cell search based on the downlink synchronization signal to obtain time-frequency synchronization with the second secondary cell.

Optionally, the processing unit 1510 is specifically configured to: before the transceiver unit 1520 receives the first information, perform the cell search based on the downlink synchronization signal to obtain time-frequency synchronization with the second secondary cell.

Optionally, before the first secondary cell is changed to the second secondary cell based on the first information, the transceiver unit 1520 is further configured to: receive a reference signal of the second secondary cell; and send channel state information, where the channel state information is determined by the processing unit 1510 based on the reference signal.

Optionally, the transceiver unit 1520 is specifically configured to: before receiving the first information, send the channel state information.

Optionally, before receiving the first information, the transceiver unit 1520 is further configured to: send second information, where the second information indicates that the terminal supports performing primary cell handover and secondary cell change simultaneously.

When the communication apparatus 1500 is configured to implement the function of the base station in the method embodiment in FIG. 6, the transceiver unit 1520 is configured to: send first information, where the first information indicates a terminal to change a primary cell from a first primary cell to a second primary cell, and the first information includes an identifier of a second secondary cell, the first information further indicates the terminal to change a secondary cell from a first secondary cell to the second secondary cell, and the first primary cell and the first secondary cell are serving cells of the terminal; and the processing unit 1510 is configured to: change the primary cell from the first primary cell to the second primary cell, and change the secondary cell from the first secondary cell to the second secondary cell.

Optionally, the transceiver unit 1520 is further configured to: send a downlink synchronization signal of the second secondary cell.

Optionally, the transceiver unit 1520 is specifically configured to: before sending the first information, send the downlink synchronization signal of the second secondary cell.

Optionally, the transceiver unit 1520 is further configured to: send a reference signal of the second secondary cell; and receive channel state information, where the channel state information is determined based on the reference signal.

Optionally, the transceiver unit 1520 is specifically configured to: before sending the first information, send the reference signal of the second secondary cell.

Optionally, before the processing unit 1510 sends the first information, the transceiver unit 1520 is further configured to: receive second information, where the second information indicates that the terminal supports performing primary cell handover and secondary cell change simultaneously.

When the communication apparatus 1500 is configured to implement the function of the terminal in the method embodiment in FIG. 11, the transceiver unit 1520 is configured to: receive third information, where the third information indicates the terminal to change a secondary cell from a first secondary cell to a second secondary cell; and the processing unit 1510 is configured to: change the secondary cell from the first secondary cell to the second secondary cell based on the third information.

Optionally, before the secondary cell is changed from the first secondary cell to the second secondary cell based on the third information, the transceiver unit 1520 is further configured to: receive a downlink synchronization signal of the second secondary cell; and the processing unit 1510 is further configured to: perform cell search based on the downlink synchronization signal to obtain time-frequency synchronization with the second secondary cell.

Optionally, the transceiver unit 1520 is specifically configured to: before receiving the third information, receive the downlink synchronization signal of the second secondary cell.

Optionally, before the secondary cell is changed from the first secondary cell to the second secondary cell based on the third information, the transceiver unit 1520 is further configured to: receive a reference signal of the second secondary cell; and send channel state measurement information, where the channel state measurement information is determined by the processing unit 1510 based on the reference signal.

Optionally, the transceiver unit 1520 is specifically configured to: before receiving the third information, receive the reference signal of the second secondary cell.

When the communication apparatus 1500 is configured to implement the function of the base station in the method embodiment in FIG. 11, the transceiver unit 1520 is configured to: send third information, where the third information indicates a terminal to change a secondary cell from a first secondary cell to a second secondary cell; and the processing unit 1510 is configured to: change the secondary cell from the first secondary cell to the second secondary cell.

Optionally, the transceiver unit 1520 is further configured to: send a downlink synchronization signal of the second secondary cell.

Optionally, the transceiver unit 1520 is specifically configured to: before sending the third information, send the downlink synchronization signal of the second secondary cell.

Optionally, the transceiver unit 1520 is further configured to: send a reference signal of the second secondary cell; and receive channel state measurement information, where the channel state measurement information is determined based on the reference signal.

Optionally, the transceiver unit 1520 is specifically configured to: before sending the third information, send the reference signal of the second secondary cell.

A person skilled in the art may clearly understand that, when the communication apparatus 1500 is configured to implement a function of a terminal or a base station, for a specific working process of the communication apparatus 1500 and technical effects generated by performing steps, refer to descriptions in the foregoing corresponding method embodiments. For brevity, details are not described herein again.

The communication apparatus 1500 may be the terminal or the base station. The processing unit 1510 may be implemented by hardware or software. When being implemented by the hardware, the processing unit 1510 may be a logic circuit, an integrated circuit, or the like. When the processing unit 1510 is implemented by the software, the processing unit 1510 may be a general-purpose processor, and is implemented by reading software code stored in a storage unit. The storage unit may be integrated into the processing unit 1510, or located outside the processing unit 1510 and exist independently.

As shown in FIG. 16, a communication apparatus 1600 includes a processor 1610 and an interface circuit 1620. The processor 1610 and the interface circuit 1620 are coupled to each other. It may be understood that, the interface circuit 1620 may be a transceiver or an input/output interface. Optionally, the communication apparatus 1600 may further include a memory 1630 configured to store instructions to be executed by the processor 1610, store input data required by the processor 1610 to run the instructions, or store data generated after the processor 1610 runs the instructions.

When the communication apparatus 1600 is configured to implement the method shown in FIG. 6 or FIG. 11, the processor 1610 is configured to implement a function of the foregoing processing unit 1510, and the interface circuit 1520 is configured to implement a function of the foregoing transceiver unit 1520.

When the communication apparatus 1600 is a chip in the terminal (that is, a chip used in a terminal), the chip in the terminal implements the function of the terminal in the method embodiments. That the chip in the terminal receives information from a base station may be understood as that the information is first received by another module (for example, a radio frequency module or an antenna) in the terminal, and then sent by the modules to the chip in the terminal. That the chip in the terminal sends information to a base station may be understood as that the information is first sent to another module (for example, a radio frequency module or an antenna) in the terminal, and then sent to the base station by the modules.

When the communication apparatus 1600 is a chip in a base station (that is, a chip used in a base station), the chip in the base station implements the function of the base station in the method embodiments. That the chip in the base station receives information from a terminal may be understood as that the information is first received by another module (for example, a radio frequency module or an antenna) in the base station, and then sent by the modules to the chip in the base station. That the chip in the base station sends information to a terminal may be understood as that the information is first sent to another module (for example, a radio frequency module or an antenna) in the base station, and then sent to the terminal by the modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that, the processor in embodiments of this application may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

The method steps in embodiments of this application may be implemented in hardware, or may be implemented in software instructions executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, a storage medium is coupled to the processor, so that the processor can read information from the storage medium and write information into the storage medium. The storage medium may be a component of the processor. The processor and the storage medium may be disposed in an ASIC. In addition, the ASIC may be located in the base station or the terminal. The processor and the storage medium may exist in a base station or a terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

Finally, for embodiments of this application, the following descriptions are further provided.

First, first, second, and various numbers in embodiments of this application are merely for differentiation for ease of description, and are not used to limit the scope of embodiments of this application. For example, a first primary cell and a second primary cell represent two primary cells, and the two primary cells may be two different cells, or may be a same cell.

Second, in embodiments of this application, an "indication" may include a direct indication and an indirect indication, or may include an explicit indication and an implicit indication. Information indicated by a piece of information is referred to as to-be-indicated information. In a specific implementation process, there are many manners of indicating the to-be-indicated information. For example, the to-be-indicated information, for example, the to-be-indicated information itself or an index of the to-be-indicated information, may be directly indicated. Alternatively, the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, the to-be-indicated information may be indicated by pre-agreeing (for example, through a protocol specifies) whether an information element exists, thereby reducing indication overheads to some extent.

Third, a "protocol" in embodiments of this application may be a standard protocol in the communication field, for example, including an LTE protocol, an NR protocol, and a related protocol applied to a future communication system. This is not limited in this application.

Fourth, "predefinition" or "preconfiguration" may be implemented by corresponding code or a table that is pre-stored in a device (for example, a terminal or a base station), or in other manners that can indicate related information. A specific implementation is not limited in this application. "Storing" may mean being stored in the one or more memories. The one or more memories may be separately disposed, or may be integrated into a processor or a communication apparatus. Alternatively, a part of the one or more memories may be separately disposed, and another part of the one or more memories are integrated into a processor or a communication apparatus. A type of the memory may be a storage medium in any form. This is not limited in this application.

Fifth, "at least one" means one or more, and "a plurality of" means two or more. "And/or" describes an association relationship between associated objects, and indicates that three relationships may exist. For example, A and/or B may indicate the following three cases: Only A exists, only B exists, and both A and B exist, where A and B may be a single object or a plurality of objects. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. a, b, and c can be a single object or a plurality of objects.

Sixth, in embodiments of this application, descriptions such as "when ...", "in a case that ...", and "if" all mean that a device (for example, a terminal or a base station) performs corresponding processing in an objective case, are not intended to limit time, do not require the device to perform a determining action during implementation, and do not mean any other limitation.

Seventh, in various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

## Claims

1. A method for cell handover, wherein the method is applied to a terminal, serving cells of the terminal comprise a first primary cell and a first secondary cell, and the method comprises:
receiving first information, wherein the first information indicates the terminal to change a primary cell from the first primary cell to a second primary cell, and the first information comprises an identifier of a second secondary cell; and
based on the first information, changing the primary cell from the first primary cell to the second primary cell, and changing a secondary cell from the first secondary cell to the second secondary cell.

2. The method according to claim 1, wherein the method further comprises:
receiving a downlink synchronization signal of the second secondary cell; and
performing cell search based on the downlink synchronization signal to obtain time-frequency synchronization with the second secondary cell.

3. The method according to claim 2, wherein the performing cell search based on the downlink synchronization signal to obtain time-frequency synchronization with the second secondary cell comprises:
before receiving the first information, performing cell search based on the downlink synchronization signal to obtain time-frequency synchronization with the second secondary cell.

4. The method according to any one of claims 1 to 3, wherein the method further comprises:
receiving a reference signal of the second secondary cell; and
sending channel state information, wherein the channel state information is determined based on the reference signal.

5. The method according to claim 4, wherein the sending the channel state information comprises:
before receiving the first information, sending the channel state information.

6. The method according to any one of claims 1 to 5, wherein the method further comprises:
sending second information, wherein the second information indicates that the terminal supports performing primary cell handover and secondary cell change simultaneously.

7. The method according to any one of claims 1 to 6, wherein the first information further comprises an identifier of the second primary cell, and the identifier of the second primary cell is the same as an identifier of the first primary cell.

8. A method for cell handover, wherein the method comprises:
sending first information, wherein the first information indicates a terminal to change a primary cell from a first primary cell to a second primary cell, and the first information comprises an identifier of a second secondary cell, the first information further indicates the terminal to change a secondary cell from a first secondary cell to the second secondary cell, and the first primary cell and the first secondary cell are serving cells of the terminal; and
changing the primary cell from the first primary cell to the second primary cell, and changing the secondary cell from the first secondary cell to the second secondary cell.

9. The method according to claim 8, wherein the method further comprises:
sending a downlink synchronization signal of the second secondary cell.

10. The method according to claim 9, wherein the sending the downlink synchronization signal of the second secondary cell comprises:
before sending the first information, sending the downlink synchronization signal of the second secondary cell.

11. The method according to any one of claims 8 to 10, wherein the method further comprises:
sending a reference signal of the second secondary cell; and
receiving channel state information, wherein the channel state information is determined based on the reference signal.

12. The method according to claim 11, wherein the sending the reference signal of the second secondary cell comprises:
before sending the first information, sending the reference signal of the second secondary cell.

13. The method according to any one of claims 8 to 12, wherein the method further comprises:
receiving second information, wherein the second information indicates that the terminal supports performing primary cell handover and secondary cell change simultaneously.

14. The method according to any one of claims 8 to 13, wherein the first information further comprises an identifier of the second primary cell, and the identifier of the second primary cell is the same as an identifier of the first primary cell.

15. A communication apparatus, comprising a processor and an interface circuit, wherein the interface circuit is configured to receive a signal from another communication apparatus and transmit the signal to the processor, or send a signal from the processor to another communication apparatus, and the processor is configured to implement, by using a logic circuit or by executing code instructions, the method according to any one of claims 1 to 7, or the method according to any one of claims 8 to 14.

16. A computer-readable storage medium, wherein the computer-readable storage medium stores a computer program or instructions, and when the computer program or the instructions are executed by a communication apparatus, the method according to any one of claims 1 to 7 is implemented, or the method according to any one of claims 8 to 14 is implemented.
